## Europäisches Patentamt
## European Patent Office
## Office européen des brevets

(11) Numéro de publication: **0 076 186**
**A1**

(12) **DEMANDE DE BREVET EUROPEEN**

(21) Numéro de dépôt: 82401668.7

(22) Date de dépôt: 14.09.82

(51) Int. Cl.$^3$: **G 01 B 7/26**

(30) Priorité: 24.09.81 FR 8118042

(43) Date de publication de la demande:
06.04.83 Bulletin 83/14

(84) Etats contractants désignés:
DE GB IT NL SE

(71) Demandeur: THOMSON-CSF
173, Boulevard Haussmann
F-75379 Paris Cedex 08(FR)

(72) Inventeur: Papuchon, Michel
THOMSON-CSF SCPI 173, bld Haussmann
F-75379 Paris Cedex 08(FR)

(72) Inventeur: Bourbin, Yannic
THOMSON-CSF SCPI 173, bld Haussmann
F-75379 Paris Cedex 08(FR)

(72) Inventeur: Kayoun, Pierre
THOMSON-CSF SCPI 173, bld Haussmann
F-75379 Paris Cedex 08(FR)

(54) Procédé de couplage entre fibres optiques monomodes.

(57) L'invention concerne un procédé de couplage entre deux fibres optiques monomodes $F_1$ et $F_2$.

Pour diminuer l'importance pour le couplage de l'erreur transversale, qui est la distance entre les axes $z_1$ et $z_2$ des fibres $F_1$ et $F_2$, dans les plans terminaux $\pi_1$, $\pi_2$, on étire les extrémités des deux fibres $F_1$ et $F_2$. On augmente ainsi l'extension des deux modes dans les fibres.

Application aux télécomunications optiques.

## FIG.2

EP 0 076 186 A1

# 0076186

## PROCEDE DE COUPLAGE ENTRE FIBRES OPTIQUES MONOMODES

L'objet de la présente invention est un procédé de couplage entre fibres optiques monomodes.

Les fibres optiques monomodes sont utilisées pour les télécommunications optiques, parce qu'elles permettent la propagation de signaux avec des bandes passantes dépassant le gigahertz. Pour ces applications, il est nécessaire de pouvoir connecter deux fibres pour réaliser une ligne. Par ailleurs, certains composants utilisés en télécommunications optiques, tels que les modulateurs, ou les détecteurs, ont une terminaison en fibre optique, qu'il faut connecter à une fibre de ligne.

Ces connexions ne doivent introduire que des faibles pertes et il faut donc obtenir un bon couplage entre fibres.

Les dispositifs connus de connexion de fibres optiques monomodes permettent de rapprocher les extrémités planes des deux fibres et de les orienter pour obtenir un bon couplage.

Le rayon du coeur d'une fibre ne propageant qu'un seul mode, n'est que de quelques microns. Le mode fondamental propagé a sensiblement une répartition gaussienne du champ électrique. La distance $W_0$ (paramètre de répartition) par rapport à l'axe de la fibre, pour laquelle ce champ électrique tombe à $1/e$ par rapport à sa valeur sur l'axe, est également de l'ordre de quelques microns.

Pour que deux fibres soient bien couplées il faut rendre minimales trois erreurs possibles : l'erreur transversale, l'erreur longitudinale et l'erreur d'orientation. Or, on maîtrise cette dernière avec une précision surabondante par l'utilisation de dispositifs en forme de V. Il reste donc à rendre les deux autres erreurs inférieures à une valeur de l'ordre du micron.

La présente invention, permet de simplifier le procédé de couplage de deux fibres par rapport à l'art antérieur.

Brièvement c'est un procédé de couplage entre fibres monomodes à variation continue d'indice propageant un mode de répartition de champ électrique sensiblement gaussien de paramètre de répartition $W_0$, caractérisé en ce qu'il comporte une étape préliminaire au cours de laquelle les fibres sont traitées, sur leurs parties terminales destinées à être couplées, de façon à obtenir sur leurs faces terminales un paramètre $W_0^1$ supérieur à $W_0$ et que ce traitement des parties terminales consiste à les chauffer pour obtenir une migration des dopants ayant pour effet de modifier sur ces parties de façon prédéterminée les valeurs de $W_0^1$.

D'autres caractéristiques et avantages ressortiront de la description qui va suivre, illustrée par les figures qui représentent :

- figure 1, deux fibres couplées suivant l'art antérieur ;

- figure 2, deux fibres couplées suivant l'invention ;

- figure 3 et 4, des schémas montrant l'avantage de l'invention ;

- figure 5, une courbe montrant la variation du paramètre de répartition du mode fondamental en fonction du rayon du coeur d'une fibre monomode.

On peut distinguer entre fibres monomodes à indice de réfraction à variation continue ou à variation brusque.

Pour les fibres à indice de réfraction à variation brusque, on a, si r est la distance à l'axe z de la fibre et n(r) l'indice de réfraction :

$$n(r) = n(g) \qquad \text{pour } r \geqslant a$$
$$n(r) = n(g) + \Delta n \text{ pour } r < a \qquad (1)$$
$$\text{avec } \Delta n = n^{(c)} - n^{(g)} \text{ et}$$

n(g) et n(r) étant les indices de réfraction de la gaine et du coeur et $\underline{a}$ étant le rayon du coeur, $\Delta n$ est appelé aussi "saut d'indice".

Pour les fibres à indice de réfraction continu, n(r) est donné par la relation suivante (où on suppose que n(r) est gaussien) :

$$n(r) = n(g) + \Delta n \exp \; -r^2/a^2 \qquad (2)$$

Pour simplifier on appellera par la suite $\underline{a}$ le rayon du coeur et $\Delta n$ la variation d'indice pour les deux sortes de fibres, les mêmes lois de propagation s'appliquant pratiquement dans ces deux cas (1) et (2).

Dans le cas où la variation d'indice est discontinue on peut montrer que pour, qu'une fibre soit monomode, il faut que :

$$V < 2,4 \qquad (3)$$
$$\text{avec } V = \frac{a2\pi}{\lambda} \sqrt{2n\Delta n} \qquad (4)$$
$$\text{où } \lambda \text{ est la longueur d'onde.}$$

Le mode fondamental, qui seul peut se propager si la relation (3) est remplie, est pratiquement tel que :

$$E(r) = \exp - r^2/W_0{}^2$$

où $E(r)$ est le champ électrique, $W_0$ est sensiblement donné, pour une répartition gaussienne par la relation :

$$W_0 = a/(V-1)^{1/2} \qquad (5)$$

où $V$ est donné par (4)

Par contre pour une variation brusque de l'indice, $W_0$ est donné par :

$$W_0 = \frac{a}{Ln\,(V^2)}$$

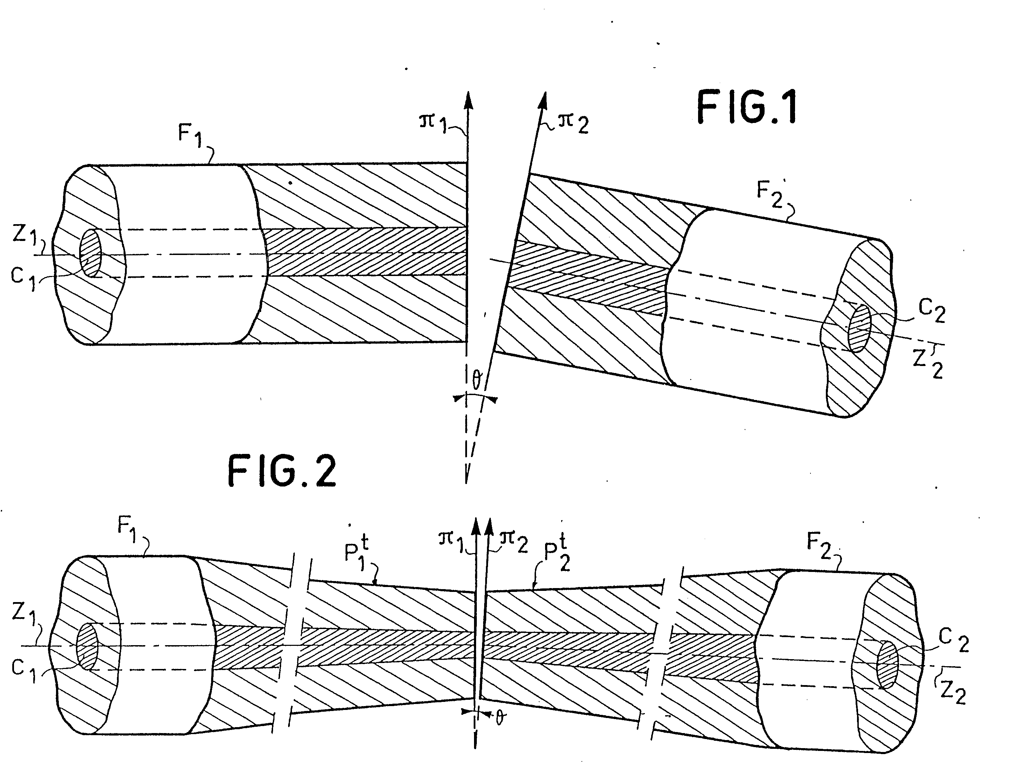

La figure 1 montre deux fibres monomodes $F_1$ et $F_2$, ayant des coeurs $C_1$ et $C_2$ de rayons $a_1$ et $a_2$ d'axes $z_1$ et $z_2$.

Pour bien coupler les deux fibres $F_1$ et $F_2$ il faut que l'angle $\theta$ entre les plans terminaux $\pi_1$ et $\pi_2$ soient faibles et réduire les erreurs longitudinales et transversales.

Si l'on suppose négligeable l'erreur longitudinale, le coefficient de couplage $\gamma$ entre les fibres est donné par la relation :

$$\gamma = \left| \iint E_1\,(x,y)\,E_2\,(x,y)\,dxdy \right|^2 \qquad (6)$$

où $E_1\,(x,y)$ et $E_2\,(x,y)$ sont les valeurs normalisées des champs électriques des modes dans les deux fibres, l'intégration se faisant dans le plan $\pi_1$.

Si $\theta$ est négligeable, les fonctions $E_1\,(x, y)$ et $E_2\,(x,y)$ sont réelles.

A titre d'exemple pour deux fibres identiques ayant toutes les deux le même paramètre $W_0$ et si l'on suppose $\theta$ négligeable, le coefficient de couplage $\lambda$ donné par (6) est tel que :

$$\gamma = \exp - \alpha^2/W_0{}^2$$

$\alpha$ étant l'erreur de positionnement transversal.

Ainsi si l'on prend $\alpha = 1\,\mu m$ on trouve pour $W_0 = 3\,\mu m$ et pour $W_0 = 6\,\mu m$, respectivement des valeurs de $\gamma$ exprimées en dB de 0,48 et de 0,12.

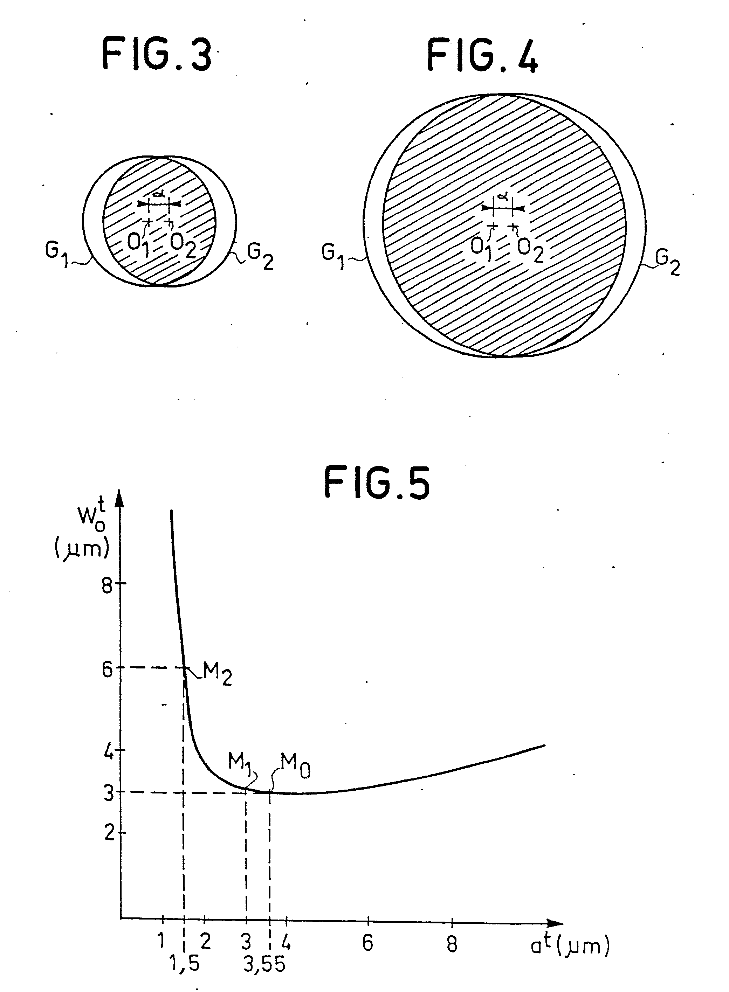

On a illustré les résultats respectifs d'une même erreur $\alpha$ de positionnement transversal à l'aide des figures 3 et 4. Sur la figure 3 on a représenté deux cercles $G_1$ et $G_2$ de rayons :

$$W_0 = 3\,\mu m$$

dont les centres $0_1$ et $0_2$ sont séparés par une distance égale à l'erreur $\alpha$ de

positionnement transversal. La surface hachurée est la surface commune aux deux cercles. On matérialise ainsi la portion d'énergie transmise d'une face terminale à celle qui lui est couplée.

Sur la figure 4, on a représenté deux cercles analogues $G_1$ et $G_2$ de rayons égaux à :

$$W_0 = 6 \ \mu m$$

ayant leurs centres $O_1$ et $O_2$ distants de la même quantité $\alpha$. La surface hachurée commune aux deux cercles est relativement plus importante, ce qui apparaît mieux en comparant les surfaces des lunules non hachurées. Ceci explique l'amélioration du coefficient de couplage dans le cas de la figure 4.

Selon une première méthode, on étire la fibre optique selon un mode opératoire très proche du tirage de la fibre à partir d'une préforme, celle-ci étant remplacée par la fibre elle-même en amont de la partie terminale Sur la figure 5 on a représenté la variation de $W_0$ en sortie en fonction du rayon du coeur de sortie $a^t$ pour une variation de l'indice conforme à la relation (5).

Les caractéristiques de la fibre optique et de la lumière transmise sont les suivantes :

$a = 3 \ \mu m$

$n = 1,47$

$n = 2,7.10^{-3}$

$\lambda = 0,83 \ \mu m$

Si l'on fait varier le rayon du coeur, par l'une des méthodes décrites ci-après, par exemple entre les valeurs 3 et 1,5 microns correspondant aux abscisses des points $M_1$ et $M_2$ de la courbe de la figure 5, seul le segment curviligne $M_1$ et $M_2$ de cette courbe correspond à une réalité physique, le reste de la courbe étant théorique.

Typiquement ces parties terminales $P_1^t$, $P_2^t$ ont des longueurs de $100\lambda$. Pour réaliser ces parties $P_1^t$ et $P_2^t$, on utilise le dispositif de traction de la machine de tirage, en chauffant la fibre optique à une certaine distance de sa partie terminale, par exemple à l'aide d'un chalumeau oxhydrique. A titre d'exemple, le dispositif de traction est réglé à une vitesse très lente de $80\mu m$ par seconde. En cinq secondes, on obtient un cône de $400 \ \mu m$ de

longueur, le diamètre externe de la fibre passant par exemple de 125 µm à environ 60 µm. Le rayon du coeur, qui lui est homothétique, passe de 3 à environ 1,5 microns. On sectionne la fibre au point de diamètre correspondant à la valeur désirée pour le rayon de coeur.

Selon une deuxième méthode, on chauffe la partie terminale de la fibre optique à une température de 800°C à 1200°C pendant une durée de 24 à 48 heures. La durée optimale peut être déterminée par tâtonnements, le résultat étant contrôlable puisqu'on sait mesurer sur une face terminale de fibre optique l'intensité de lumière en différents points et par conséquent en déduire la valeur du paramètre $W_0$. L'explication théorique de l'efficacité de cette deuxième méthode est la suivante : le chauffage à une température, de l'ordre de celles qui ont été indiquées ci-avant, produit une migration d'une partie du dopant du coeur vers la périphérie de la fibre. Il en résulte une modification du gradient d'indice aboutissant à une augmentation de la valeur du rayon du coeur de la fibre optique. On sectionne la fibre au point de chauffage pour obtenir la face terminale de paramètre désiré.

6

## REVENDICATIONS

1. Procédé de couplage entre fibres monomodes $(F_1, F_2)$ à variation continue d'indice propageant un mode de répartition de champ électrique sensiblement gaussien de paramètre de répartition $W_0$, caractérisé en ce qu'il comporte une étape préliminaire au cours de laquelle les fibres $(F_1, F_2)$ sont traitées, sur leurs parties terminales $(P_1^t, P_2^t)$ destinées à être couplées, de façon à obtenir sur leurs faces terminales un paramètre $W_0^t$ supérieur à $W_0$ et que ce traitement des parties terminales $(P_1^t, P_2^t)$ consiste à les chauffer pour obtenir une migration des dopants ayant pour effet de modifier sur ces parties de façon prédéterminée les valeurs de $W_0^t$.

# FIG.1

$F_1$
$\pi_1$ $\pi_2$
$F_2$
$Z_1$
$C_1$
$C_2$
$Z_2$
$\theta$

# FIG.2

$F_1$
$P_1^t$
$\pi_1$ $\pi_2$
$P_2^t$
$F_2$
$Z_1$
$C_1$
$C_2$
$Z_2$
$\theta$

2/2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 02 B 7/26 |
| X | US-A-3 825 319 (J.S.COOK et al.) *Résumé; colonne 1, lignes 33-61; colonne 2, lignes 11-68; colonne 3, ligne 32 - colonne 4, ligne 15; figure 1* | 1,2 | |
| | --- | | |
| X | US-A-3 819 249 (M.BORNER et al.) *Résumé; colonne 2, ligne 56 - colonne 3, ligne 26; colonne 3, lignes 37-50; figures 1-9* | 1-3 | |
| | --- | | |
| X | US-A-3 579 316 (R.B.DYOTT et al.) *Résumé; colonne 2, lignes 13-23,32-44; colonne 2, ligne 55 - colonne 3, ligne 31; figures 1-5* | 1,2 | DOMAINES TECHNIQUES RECHERCHES (Int. Cl. ³) |
| | --- | | |
| A | GB-A-2 033 099 (S.T.C.LTD.) *Résumé; page 1, lignes 93-101; figure 3* | 1 | G 02 B 7/26 H 04 B 9/00 |
| | --- | | |
| P,A | ELECTRONIC DESIGN, vol. 29, no. 23, 12 novembre 1981, pages 255-268, Wasez, Mn, (USA); M.GROSSMAN: "Focus on fiber-optic connectors: low-cost linking still a challenge". *Page 257, "Figures" "Transfer molded align- ment" et "watch-jewel alignment"* | 1 | |
| | --- -/- | | |

Le present rapport de recherche a été établi pour toutes les revendications

| Lieu de la recherche | Date d'achèvement de la recherche | Examinateur |
|---|---|---|
| LA HAYE | 01-12-1982 | BEAVEN G.L. |

BAD ORIGINAL

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | **Page 2** |
| A | APPLIED OPTICS, vol. 15, no. 6, juin 1976, pages 1394-1397, New York (USA); E.GARMIRE et al.: "Zinc-divvused two-dimensional optical waveguides in n-type GaAs". *Page 1394, colonne de droite, ligne 4 - page 1395, colonne de gauche, ligne 7, figure 1* | 1,3 | |
| A | US-A-3 802 761 (T.G.GIALLORENZI et al.) *Résumé; colonne 3, lignes 11-33; figures 1-5* | 1,3 | |

DOMAINES TECHNIQUES RECHERCHES (Int. Cl. ³)

Le present rapport de recherche a ete établi pour toutes les revendications

| Lieu de la recherche | Date d'achèvement de la recherche | Examinateur |
|---|---|---|
| LA HAYE | 01-12-1982 | BEAVEN G.L. |